# EUROPÄISCHE PATENTSCHRIFT

(11) **EP 0 416 351 B1**
(45) Veröffentlichungstag und Bekanntmachung des Hinweises auf die Patenterteilung: **20.07.1994**
(21) Anmeldenummer: 90115840.2
(22) Anmeldetag: 18.08.1990
(51) Int. Cl.: B01D 25/02, B01D 25/26, A01K 63/04

(54) **Teichfilter**
Poolfilter
Filtre pour étang

(30) Priorität: 08.09.1989 DE 3930042
(43) Veröffentlichungstag der Anmeldung: 13.03.1991
(73) Patentinhaber: OASE-PUMPEN Wübker Söhne GmbH & Co., Maschinenfabrik, 48477 Hörstel (DE)
(72) Erfinder: Hoffmeier, Dieter, D-4530 Ibbenbüren (DE)
(74) Vertreter: Busse & Busse Patentanwälte

(56) Entgegenhaltungen:
- DE-A- 1 948 272
- DE-A- 3 417 248
- DE-B- 1 200 258
- DE-C- 319 500
- DE-U- 8 704 480
- GB-A- 2 195 910

## Beschreibung

Die Erfindung betrifft einen Teichfilter nach dem Oberbegriff des Anspruchs 1.

Teichfilter dieser Art sind neben einer sonstigen Vielzahl von Filterformen gebräuchlich, die zunächst einmal bei Fontänen oder umgepumpten Fließgewässern das System von Rohren, Pumpen und ggf. Düsen vor Verschmutzungen schützen sollten. Mit weitergehenden Erkenntnissen, daß es zweckmäßig oder geboten sein kann, auch bei ruhigen Teichen das Wasser zu filtern, um grobe Schwimmstoffe, aber insbesondere auch Faulstoffe herauszuziehen, hat sich ein differenzierter Bedarf an Filterkapazität und Filterfeinheit ergeben. Unterschiede resultieren dabei auch aus dem Wasservolumen des Teiches, wenn man von einer Richtlinie ausgeht, daß die Wassermenge eines Teiches zwei- bis sechsmal den Filter durchlaufen sollte. Dies alles führt zu unübersichtlichen Sortimenten im Markt und zu Unsicherheiten und Fehlern beim Kauf. Nachteile bekannter Filter ergeben sich auch darin, daß im Filter selbst nur Feinstoffe gefangen werden, während gröbere Partikel außen abgefangen werden. Beim Reinigen oder Auswechseln des Filters verbleiben letztere, oft auch mit einem großen Anteil feiner Schmutzpartikel, im Teich, so daß der angestrebte Effekt des Filters nur im begrenztem Umfang erzielbar ist.

Beispeile für Teichfilter bekannter Art finden sich in der DE-U-8704 480, bei der ein Gehäuse als offene Folienschale, mit Filtermaterial ausgebildet und von der Oberseite zu einem unterseitigen Saugeinlaß durchströmt wird. Dieser Teichfilter ist zwar einfach, preiswert und robust auszuführen, eignet sich aber nur für eng begrenzte Aufgaben und Leistungen. Eine Filtervorrichtung nach der DE-A-1948 272, insbesondere für Schwimmbäder, weist zwar einen großen Durchlaufquerschnitt aufgrund mehrerer parallel durchströmter Filterelemente auf, ist aber aufgrund eines dichten zylindrischen Kessel-Gehäuses und der fest vorgegebenen Inneneinrichtung aufwendig und unveränderlich.

Aufgabe der Erfindung ist es, einen Teichfilter zu schaffen, der sich gut unterschiedlichen Anforderungen an die Filterung anpaßt und dabei eine wirksame Filterung hinsichtlich eines großen Bereichs von auszufilternden Stoffen und Partikelgrößen erzielt und der unbeschadet dieser besonderen Anforderungen so robust und einfach ist, daß er im Langzeitbetrieb auch von Laien ohne technische Fachkennntnisse zu benutzen ist.

Gemäß der Erfindung wird diese Aufgabe von einem Teichfilter nach dem Oberbegriff des Anspruchs 1 ausgehend mit den kennzeichnenden Merkmalen des Anspruchs 1 gelöst. Das Grundprinzip eines elementweise vergrößerbaren Filters mit Filterplatten, die auf jeder Seite eine Einlaufkammer und eine Auslaufkammer aufweisen, schafft eine anpaßbare Kapazität an die Wassermenge, die Filterungsansprüche und den Verschmutzungsgrad. Es können bedarfsweise kleine oder große Zahlen von Gehäuseelementen aneinandergereiht werden, die dann dazu führen, daß die Filterelemente im Parallelbetrieb arbeiten, so daß die Belastung je Filterplatte mit der Zahl der Gehäuseelemente abnimmt. Dies ist nicht nur für die Lebensdauer der Filter von Interesse, die bei abnehmender Durchströmungsgeschwindigkeit progressiv zunimmt, sondern auch für die Filterqualität, indem sich Feinpartikel leichter absetzen und weniger leicht mitgerissen werden.

Mit einer Erweiterung eines solchen Filters durch eine Ergänzung mit zusätzlichen Zwischenelementen wird auch die Zahl der Einlaufkammern größer. Jede der Einlaufkammern ist bei der hier vorgesehenen Elementbauweise vorteilhaft, als sie eine Speicherkapazität für Partikel, insbesondere auch größere Partikel schafft. Diese Partikel gelangen also in das Gehäuse hinein und werden somit beim Reinigen oder Auswechseln des Filters oder der Filterplatten mitentfernt. Rückverschmutzungen des Wassers, wie sie bei Filtern mit außen vorgeschalteten Siebflächen oder außenliegenden Filterflächen auftreten, lassen sich so vermeiden. Verständlicherweise wird die Aufnahmekapazität der Einlaufkammern mit der Zahl der Gehäuseelemente vergrößert. Gerade die Veränderbarkeit des Filters ist ein entscheidender Vorteil, da sich der tatsächliche Filterungsbedarf oft bei der Installation noch nicht verläßlich abschätzen läßt. Es ist also nicht erforderlich, von vornherein sicherheitshalber einen überdimensionierten Teichfilter zu kaufen und zu installieren. Es ist aber auch nicht erforderlich, sich mit einem zu kleinen Teichfilter zufriedenzugeben, der Benutzer kann vielmehr seinen Teichfilter bedarfsgerecht durch Einfügen von Zwischenelementen ausbauen oder auch durch Herausnehmen von Zwischenelementen verkleinern.

Daneben macht die Elementbauweise möglich, durch Austausch der Filterplatten oder ganzer Gehäuseelemente die Filterfeinheit zu verändern. Mit einer scheibenförmigen Anordnung der Filterplatten läßt sich in jedem Fall ein relative großflächiges, und widerstandsarmes Filtersystem bereitstellen.

Ein Ausführungsbeispiel des Gegenstands der Erfindung ist in der Zeichnung dargestellt und wird nachfolgend näher beschrieben. In der Zeichnung zeigen:
- Fig. 1: Längsschnitt durch einen Teichfilter mit angesetzter Motorpumpe und
- Fig. 2: Flächenansicht eines Zwischenelements zum Teichfilter gemäß Fig. 1, in Richtung der Linie II-II in Fig. 1 gesehen.

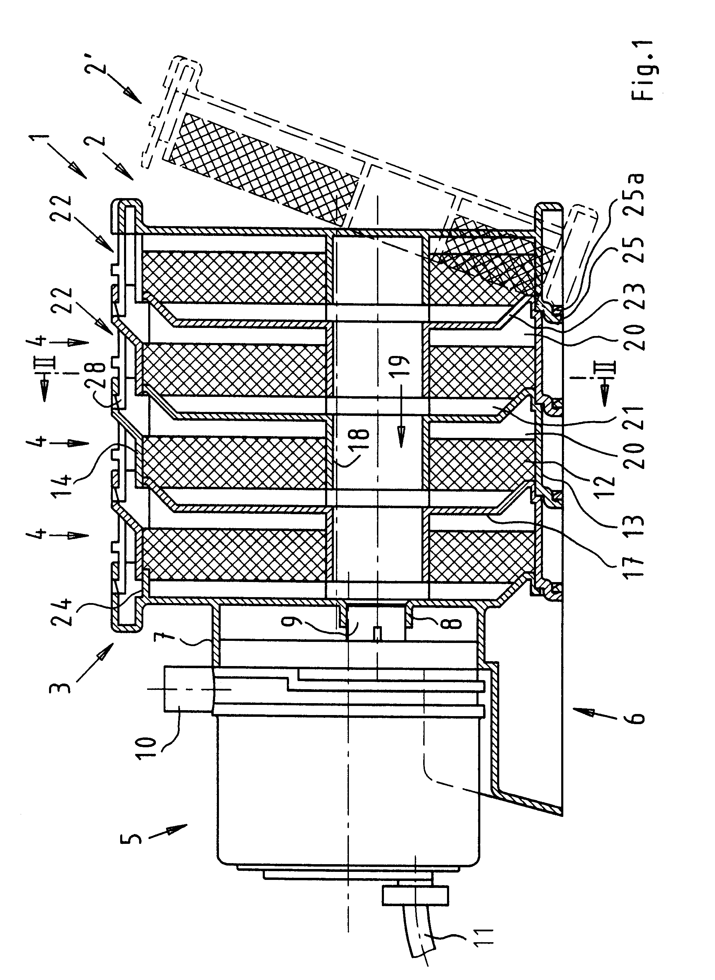

Der in Fig. 1 insgesamt mit 1 bezeichnete Teichfilter setzt sich zusammen aus einem Endelement 2, das in gebrochenen Linien noch einmal schräg abgeklappt als 2′ angedeutet ist, einem gegenüberliegenden Endelement 3 und drei untereinander gleichen Zwischenelementen 4. Der Aufbau der Endelemente 2 und 3 ergibt sich als Abwandlung der Zwischenelemente 4, wobei das Endelement 2 einen endseitigen Abschluß des Filters bildet, während das Endelement 3 für einen unmittelbar angeschlossenen Pumpenmotor 5 einen Auflagerungsbereich 6, einen umlaufenden Steckstutzen 7 und insbesondere einen Sauganschlußstutzen 8 bietet, in den ein Saugrohrstück 9 der Pumpe 5 eingreift, während ein Druckrohrstück 10 der Pumpe senkrecht dazu (mit einstellbarer Richtung) herausführt. Ein Kabelanschluß 11 ist für die Stromzuführung zur Motorpumpe 5 vorgesehen.

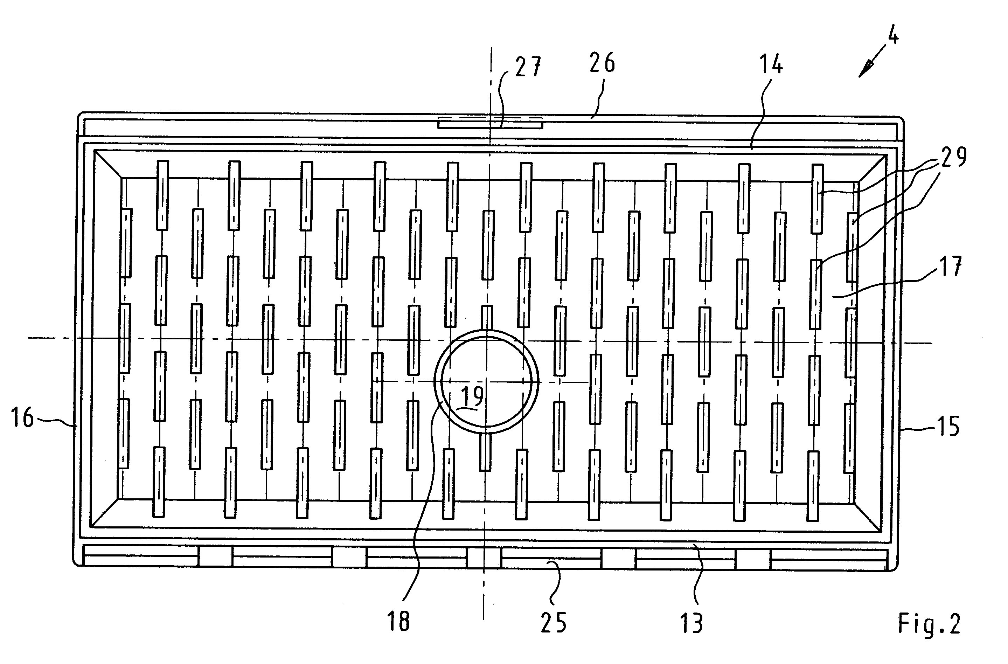

Jedes Zwischenelement 4 umfaßt eine Filterplattte 12 mit einem rechteckigen Umriß, die randseitig gegen umlaufende Wände 13,14,15,16 (vergl. auch Fig. 2) abdichtend anliegt. Die Wände sind Teil eines schalenförmigen einstückigen Kunststoffkörpers mit (parallel zu der Filterplatte 12) einem Boden 17, der in einem mittleren Bereich eine in einen Auslaufstutzen 18 mündende Öffnung 19 aufweist, wobei der Auslaufstutzen 18 in dichtender Anlage des Filtermaterials von der Filterplatte 12 umschlossen ist.

Die Filterplatten 12 sind voneinander auf Abstand gehalten und die Zwischenräume, die infolge der Abstände zwischen den Filterplatten entstehen, sind durch die Böden 17 jeweils in eine Einlaufkammer 20 und eine Auslaufkammer 21 unterteilt, wobei jede der Einlaufkammern 20 über Schlitzöffnungen 22 längs der Oberseite der Zwischenelement 4 (und des Endelements 2) mit dem umgebenden Wasser in Verbindung stehen, während die Auslaufkammern untereinander und mit dem Ansaugstutzen 9 der Pumpe 5 in Verbindung stehen. In diesem Sinne sind die Stutzen 18 von dem zugehörigen Boden 17 aus lediglich über die Breite der benachbarten Einlaufkammer 20 und der benachbarten Filterplatte 12 geführt, so daß sich zum Stutzen des jeweils benachbarten Zwischenelements 4 ein freier Ringspalt in der Breite der Auslaufkammer 21 ergibt.

Von besonderem Interesse für ein einfaches und unproblematisches Aneinanderreihen der Gehäuseelemente ist, daß der Boden 17 mit einem die Auslaufkammer 21 begrenzenden Randbereich 23 bis zu einer dichtenden (hineingedrückten) Anlage zu der benachbarten Filterplatte herübergeführt ist. Die Abdichtung der Gehäuseelemente untereinander benötigt somit keine zusätzlichen Dichtlippen, Dichtringe oder dergleichen. Eine ganz entsprechende Funktion hat ein Randsteg 24 an der Oberkante des Endelements 3, der sich in den Randbereich der Filterplatte des benachbarten Zwischenelements 4 hineindrückt.

Auch die Montage der Gehäuseelemente untereinander ist einfach und robust. Die Randbereiche der Gehäuseelemente sind komplementär aneinander angepaßt, so daß sie formschlüssig ineinandergreifen und sich nicht flächig gegeneinander verschieben können. Die Fig. 2 zeigt eine Flächenansicht des Bodens 17 und der umfangsseitigen Wandungen 13,14,15 und 16. Die Wandungen 13,15 und 16 umgreifen bereichsweise die Wandungen des Nachbar-Elements. An der Unterseite ist unterhalb der Wandung 13 eine scharnierartige Verhakung mit Hakenfortsätzen 25 und Hakenaufnahmen 25a auf der einen und auf der anderen Seite gebildet. Auf der oberen Seite des Filters sind elastische ineinanderrastende Verhakungen ausgebildet, wobei ein über die ganze Breite eines Elements gehender Bügel 26 einen mittleren Hakenvorsprung 27 trägt, der hinter eine Verhakungsschulter 28 auf dem Nachbarelement greift. Diese einfach zusammensteckbare Anordnung erleichtert die Handhabung und gewährleistet einen robusten Betrieb auf Dauer.

Aus Fig. 2 ist eine Rasterstruktur von Rippen 29 auf dem Boden 17 erkennbar. Diese sichern den Abstand zwischen dem Boden 17 und der benachbarten Filterplatte 12 auf der Auslaufseite, auf der die Filterplatte 12 sonst flach gegen den Boden angepreßt werden könnte. Diese Rippen 29 sind vorteilhaft nur in kurzen, durch Abstände unterbrochenen Rippenabschnitten ausgebildet, so daß sie die Strömung in der Auslaufkammer nicht oder jedenfalls sehr wenig behindern.

Aus Vorstehendem ergibt sich der Aufbau und die Funktion eines Zwischenelements aus einem einstückigen Kunststoffkörper und einer dichtend eingesetzten Filterplatte. Daraus leitet sich aber auch ohne weiteres die Funktion der beiden Endelemente 2 und 3 ab, bei denen das Endelement 2 von seiner Funktion her im wesentlichen einen Endverschluß der untereinander verbundenen Auslaufkammern 21 schafft. Es versteht sich also, daß das Endelement 2 durch ein Zwischenelement 4 ersetzt werden könnte, wobei lediglich die Öffnung 19 im Stutzen 18 durch einen Stopfen, eine Platte oder dergl. zu verschließen wäre. Die eigenständige Ausgestaltung des Endelements der vorliegenden Art erlaubt aber Ansprüche an die Außenform des Gehäuses zu erfüllen und den Rand zweckmäßig glatt auszubilden, so daß sich keine vorstehenden und verhakungsanfälligen Randelemente ergeben.

Auch das Endelement 3 könnte grundsätzlich durch ein Zwischenelement 4 (ohne Filterplatte) gebildet werden, indem ein Adapter für den Anschluß einer Tauchpumpe oder einer Schlauchzuleitung zu einer Pumpe bildet. Im vorliegenden Fall ist auch hier ein eigenständiges Endelement geschaffen worden, das gehobenen Handhabungsansprüchen mit einer geschlossenen Kantenausbildung und Halterungen für die Motorpumpe entspricht.

Der dargestellte Filter ist für eine liegende Anordnung ausgebildet. Dazu haben die Endelemente 2,3 und Zwischenelemente 4 einen rechteckigen Grundriß und Schlitzöffnungen 22 nur an einer obenliegenden Seite. Bei einer stehenden Anordnung kann man zweckmäßig kreisförmige Grundrisse für die dann übereinanderliegenden Elemente und Schlitzöffnungen auf allen Seiten vorsehen.

Es versteht sich, daß ein solcher Filter auch in Aquarien eingesetzt werden kann.

## Patentansprüche

1. Teichfilter (1) mit einem zumindest eine Öffnung für einen Einlauf (22) und zumindest eine weitere Öffnung (8) für einen Auslauf aufweisenden Gehäuse, in dem randseitig abschließend zumindest eine Filterplatte (12) so mit freier Zugänglichkeit der beiden Plattenseiten angeordnet ist, daß eine Plattenseite mit einer Einlaufkammer (20) und die andere Plattenseite mit einer Auslaufkammer (21) verbunden ist, dadurch gekennzeichnet, daß das Gehäuse mehrere flach aneinanderreihbare, einstückige und schalenförmige Gehäuseelemente (2,3,4), die einen Teichfiltersatz aus Endelementen (2,3) und Zwischenelementen (4) bilden, umfaßt, daß zumindest die Zwischenelemente (4) untereinander gleich ausgebildet sowie zur Aufnahme zumindest einer Filterplatte (12) vorgesehen sind, und daß der Boden (17) der Zwischenelemente (4) zur Trennung von Einlaufkammer (20) und Auslaufkammer (21) benachbarter Filterplatten (12) ausgebildet ist.

2. Teichfilter nach Anspruch 1, dadurch gekennzeichnet, daß der Boden (17) einerseits mit Distanz-Vorsprüngen (29) zur Ausstützung der Auslaufkammer (21) versehen ist.

3. Teichfilter nach Anspruch 1 oder 2, dadurch gekennzeichnet, daß die Gehäuseelemente (2,3,4) mit komplementär ausgebildeten Rändern (13,14,15,16) unverschiebbar aneinander liegen.

4. Teichfilter nach Anspruch 1,2 oder 3, dadurch gekennzeichnet, daß die Gehäuseelemente (2,3,4) elastisch ineinanderrastende Verhakungen (27,28) zur Verbindung zweier benachbarter Element (2,3,4) aufweisen.

5. Teichfilter nach einem der Ansprüche 1 bis 4, dadurch gekennzeichnet, daß die Gehäuseelemente (2,3,4) zwischeneinander an einem Rand (13) scharnierartig ineinandergreifende Verhakungen (25,25a) aufweisen.

6. Teichfilter nach einem der Ansprüche 1 bis 5, dadurch gekennzeichnet, daß die Zwischenelemente (4) einen mit dem Boden (17) einstückig verbundenen innenliegenden Auslaufstutzen (18) aufweisen, an dem umfangsseitig die Filterplatte (12) dicht anliegt.

7. Teichfilter nach einem der Ansprüche 1 bis 6, dadurch gekennzeichnet, daß die Zwischenelemente (4) dicht am Rand der Filterplatte (12) anliegenden Wände (13,14,15,16) aufweisen.

8. Teichfilter nach Anspruch 6 und 7, dadurch gekennzeichnet, daß der Boden (17) mit einem die Auslaufkammer (21) begrenzenden Randbereich (23) dicht an der benachbarten Filterplatte (12) liegt.

## Claims

1. A pond filter (1) with a housing having at least one aperture for an inlet (22) and at least one further aperture (8) for an outlet and in which, closing off the edge, there is at least one filter plate (12) which is so disposed with free accessibility of both sides of the plate that one side of the plate is connected to an inlet chamber (20) while the other side of the plate is connected to an outlet chamber (21), characterised in that the housing comprises a plurality of flat and adjacently disposed one-piece and dished housing elements (2, 3, 4) which form a pond filter set consisting of end elements (2, 3) and intermediate elements (4), and in that at least the intermediate elements (4) are constructed to be the same as one another and are provided to accommodate at least one filter plate (12) and in that the bottom (17) of the intermediate elements (4) is constructed to isolate inlet chamber (20) and outlet chamber (21) of adjacent filter plates (12).

2. A pond filter according to claim 1, characterised in that the bottom (17) is provided on one side with spacing projections (29) for supporting the outlet chaser (21).

3. A pond filter according to claim 1 or 2, characterised in that the housing elements (2, 3, 4) have matchingly constructed edges (13, 14, 15, 16) by which they bear on one another in a non-displaceable manner.

4. A pond filter according to claim 1, 2 or 3, characterised in that the housing elements (2, 3, 4) have elastically inter-engaging hook members (27, 28) for the connection of two adjacent elements (2, 3, 4).

5. A pond filter according to one of claims 1 to 4, characterized in that the housing elements (2, 3, 4) have between one another hook members (25, 25a) which interengage in hinge fashion on an edge (13).

6. A pond filter according to one of claims 1 to 5, characterized in that the intermediate elements (4) have, connected to the bottom (17), an integrally connected inner outlet socket (18) against the periphery of which the filter plate (12) rests in sealing-tight manner.

7. A pond filter according to one of claims 1 to 6, characterized in that the intermediate elements (4) have walls (13, 14, 15, 16) which rest tightly against the edge of the filter plate (12).

8. A pond filter according to claim 6 and 7, characterised in that the bottom (17) has, defining the outlet chamber (21), a marginal zone (23) which bears in sealing-tight manner against the adjacent filter plate (12).

## Revendications

1. Filtre d'étang, avec un boîtier comportant au moins une ouverture pour une entrée (22) et au moins une autre ouverture (8) pour une sortie, avec en fermeture, du côté du bord, au moins une plaque de filtre (12) avec libre accessibilité par les deux côtés de la plaque, un côté de la plaque étant relié à une chambre d'entrée (20) et l'autre côté de la plaque avec une chambre de sortie (21), caractérisé en ce que le boîtier comporte plusieurs éléments (2, 3, 4), en une seule pièce et en forme de coquille, qui se relient les uns aux autres à plat, et qui englobent un élément de filtre formé d'éléments d'extrémité (2, 3) et d'éléments intermédiaires (4), et au moins les éléments intermédiaires (4) sont identiques et sont prévus pour recevoir au moins une plaque de filtre (12) et en ce que le fond (17) des éléments intermédiaires (4) est réalisé pour séparer la chambre d'entrée (20) et la chambre de sortie (21) de plaques de filtre (12) voisines.

2. Filtre selon la revendication 1, caractérisé en ce que le fond (17) est muni d'un côté de saillies d'écartement (29) pour le soutien de la chambre de sortie (21).

3. Filtre selon la revendication 1 ou 2, caractérisé en ce que les éléments de boitier (2, 3, 4) sont appliqués les uns contre les autres de manière non coulissante, par des bords de formes complémentaires (13, 14, 15, 16).

4. Filtre selon la revendication 1, 2 ou 3, caractérisé en ce que les éléments de boîtier (2, 3, 4) comportent des crochets (27, 28) s'accrochant les uns dans les autres de manière élastique pour relier deux éléments voisins (2, 3, 4).

5. Filtre selon l'une des revendications 1 à 4, caractérisé en ce que les éléments de boîtier (2, 3, 4) ont des crochets (25, 25a) qui viennent prendre entre eux à la manière de charnières au niveau d'un bord (13).

6. Filtre selon l'une des revendications 1 à 5, caractérisé en ce que les éléments intermédiaires (4) ont des embouts de sortie (18) reliés en au seul élément de manière imbriquée et faisant corps avec le fond (17) et s'appliquant de manière étanche contre la périphérie de la plaque de filtre (12).

7. Filtre selon l'une des revendications 1 à 6, caractérisé en ce que les éléments intermédiaires (4) ont des parois (13, 14, 15, 16) appliquées étroitement contre le bord de la plaque de filtre (12).

8. Filtre selon les revendications 6 et 7, caractérisé en ce que le fond (17) est appliqué de manière étanche contre la plaque de filtre voisine (12) par une zone de bord (23) adjacente à la chambre de sortie (21).
